# EUROPEAN PATENT APPLICATION

(11) **EP 1 959 148 A2**
(43) Date of publication of application: **20.08.2008**
(21) Application number: 08002047.2
(22) Date of filing: 04.02.2008
(51) Int. Cl.: F16C 29/06, F16C 33/50

(54) **Linear guide apparatus and rolling elements accomodation belt**

(30) Priority: 15.02.2007 JP 2007034851
(71) Applicant: NSK Limited, Shinagawa-ku Tokyo 141-8560 (JP)
(72) Inventor: Mizumura, Yoshinori, Fujisawa-shi Kanagawa 251-8501 (JP); Xu, Wei, Fujisawa-shi Kanagawa 251-8501 (JP)
(74) Representative: Grünecker, Kinkeldey, Stockmair & Schwanhäusser Anwaltssozietät

(57) **Abstract**

A linear guide apparatus (100) includes a plurality of rolling elements (B) which circulate within a rolling element circulation path (30a,30b) at predetermined intervals, spacers (51) disposed between the respective rolling elements and a rolling elements accommodation belt (50) which accommodates the rolling elements, connects each of the spacers and has ends thereof. At least one rolling element (B1) is disposed between the ends of the rolling elements accommodation belt, a cantilever-shaped elastically deformable projection (53) is provided on an end face of the spacer situated at the end of the rolling elements accommodation belt, the projection projects from an inner circumferential side towards an outer circumferential side of the rolling element circulation path and the projection is inclined relative to an external end face of the spacer at the end of the rolling elements accommodation belt.

## Description

### BACKGROUND OF THE INVENTION

### 1. Field of the Invention

The present invention relates to a linear guide apparatus employed on various types of machines such as manufacturing apparatus, working machines and measuring equipment and a rolling elements accommodation belt which is applied to the linear guide apparatus.

### 2. Description of Related Art

A linear guide apparatus which guides a guided member in a straight line while causing a plurality of rolling elements to circulate in an interior thereof is an apparatus which includes a slider supported on a guide rail so as to travel in an axial direction by virtue of rolling of a plurality of rolling elements provided within a rolling element rolling path formed between a rail-side rolling element raceway surface and a slider-side rolling element raceway surface provided so as to face each other.

In addition, this linear guide apparatus includes an endless rolling element circulation path in which the rolling element rolling path and a rolling element return path provided in the slider so as to extend substantially parallel to the rolling element rolling path are caused to communicate with each other by direction turning paths which are provided, respectively, on end caps mounted on end portions in a traveling direction of the slider, whereby the slider is made to travel smoothly relative to the guide rail by virtue of rolling of the plurality of rolling elements within the rolling element circulation path.

In the linear guide apparatus which is configured as described above, since, when the slider travels relative to the guide rail, the respective rolling elements rotates to travel in the same direction, the adjacent rolling elements are caused to rub against each other, whereby the smooth rolling of the rolling elements is disrupted. As a result of this, in some cases, operation noise is increased or propagation of wear of the rolling element is quickened.
Because of this, in order to enable the smooth rolling operation of rolling elements while suppressing the occurrence of such operation noise and propagation of wear, rolling elements accommodation belts have conventionally been proposed which can allow rolling elements to be aligned into a line at predetermined intervals in such a manner as not to be brought into contact with each other within the rolling element circulation path.

This rolling elements accommodation belt is configured into a belt having ends so that the belt can be built into the slider, and guide grooves or guide surfaces for guiding a connecting arm portion which connects together spacers provided between the respective rolling elements in the rolling elements accommodation belt are provided so as to extend along the full circumference of the rolling element circulation path.
In addition, since this rolling elements accommodation belt moves within the rolling element circulation path along the guide grooves or guide surfaces, the connecting arm portion of the rolling elements accommodation belt moves while in contact with the guide surfaces at all times. Because of this, there have conventionally been proposed various devises for smooth circulation of the rolling elements accommodation belt.

For example, in Japanese Patent Examined Publication No. JP-B-3243415 below, one or a plurality of rolling elements accommodation belts having ends are accommodated within a rolling element circulation path, and a gap is formed between both end portions of the rolling elements accommodation belt which face within the circulation path, and furthermore, and a chamfered guide portion is provided at a distal edge or end of each side of the connecting arm portion of the rolling elements accommodation belt for smooth circulation.

In addition, the following three techniques (a) to (c) are described in Japanese Patent Unexamined Publication No. JP-A-11-2241 below.
(a) A pair of concave distal end faces, which are adapted to face each other via one cushioning rolling element within a rolling element circulation path, are provided at both longitudinal end portions of a rolling elements accommodation belt. In order to enable the smooth circulation of the rolling elements accommodation belt within the rolling element circulation path, these concave distal end faces hold the cushioning rolling element therebetween so that the distal end portions of the rolling elements accommodation belt are prevented from being brought into rubbing contact with inner walls of direction turning paths.

(b) A concave distal end face is provided at one longitudinal end of the rolling elements accommodation belt, and a convex distal end face, which matches the concave distal end face, is provided at the other end. In order to enable the smooth circulation of the rolling elements accommodation belt within the rolling element circulation path, the concave distal end face and the convex distal end face are brought into abutment with each other so that distal end portions of the rolling elements accommodation belt are prevented from being brought into rubbing contact with inner walls of the direction turning paths.
(c) In order to enable the smooth circulation of the rolling elements accommodation belt in the direction turning path, guiding pieces are provided at both end portions of the rolling elements accommodation belt so as to protrude therefrom further in a longitudinal direction than rolling elements which are situated at both ends of the rolling elements accommodation belt, so that the rolling elements accommodation belt is made to enter the direction turning paths with the guiding pieces at the head of the belt.

In addition, in Japanese Patent Unexamined Publication No. JP-A-2004-144283 below, there is disposed a rolling elements accommodation belt in which adjacent end portions of the rolling elements accommodation belt include movable leg portions which are disposed so as to cross the rolling elements accommodation belt, and the leg portions have facing contact surfaces on their sides which face each other. This leg portion is connected integrally with a spacer at an end portion of the rolling elements accommodation belt via a joint so as to extend in a direction of a space axis which is vertical to a lower surface and an upper surface of a connecting arm portion. Therefore, when a compression force is applied in a traveling direction, the compression force is made to be transmitted at the height of the connecting arm portion of the rolling elements accommodation belt.

Incidentally, in the techniques described in JP-B-3243415 and (c) in JP-A-11-2241, since the chamfered guide portions or the guiding pieces are provided at the end portions of the connecting arm portion of the rolling elements accommodation belt, the connecting arm portions can circulate smoothly in the guide grooves provided along the rolling element circulation path. However, since the gap is intentionally configured to be provided between the facing end portions of the rolling elements accommodation belt, repetitive tensile force is applied to the rolling elements accommodation belt in addition to repetitive bending. In particular, when the rolling elements accommodation belt is circulated at high speeds, the circulation resistance of the rolling elements and the rolling elements accommodation belt is increased largely due to viscous drag or the like, and since an excessively large repetitive tensile force is applied to the rolling elements accommodation belt, it is difficult to obtain a sufficient durability.

In addition, in the configuration of (a) in JP-A-11-2241, the pair of concave distal end faces, which face each other via the cushioning rolling element, are provided at the end portions of the rolling elements accommodation belt, and these concave distal end faces hold the cushioning rolling element therebetween so as to prevent the rubbing contact of the distal end portions of the rolling elements accommodation belt with the inner walls of the direction turning paths. However, when attempting to realize this configuration, it is required to realize a state in which the distal end faces of the rolling elements accommodation belt hold the cushioning rolling element therebetween with the cushioning rolling element pressed against by both the distal end faces of the rolling elements accommodation belt. To realize this state, the rolling elements accommodation belt needs to be tensioned within the circulation path at all times. In this state, since the guide arm portion is caused to circulate while being pressed against outer circumferential surfaces of the guide grooves, it is considered that friction is increased or the rolling elements accommodation belt wears.
Furthermore, also as to the configuration of (b) in JP-A-11-2241, although the distal end portions of the rolling elements accommodation belt are prevented from being brought into rubbing contact with the inner walls of the direction turning paths, without the state in which the distal ends of the rolling elements accommodation belt press against each other, the distal end portions of the belt deviate to an outer circumferential side within the direction turning paths. Accordingly, the distal ends of the rolling elements accommodation belt circulates within the direction turning paths while in rubbing contact with the inner walls.

On the other hand, in the technique described in JP-A-2004-144283, the configuration is proposed in which the leg portions are provided at the distal ends of the rolling elements accommodation belt so as to protrude therefrom via the joints. Therefore, when the compression force is applied to the rolling elements accommodation belt in the traveling direction within the circulation path, the force is made to be transmitted at the height of the connecting arm portion of the rolling elements accommodation belt. However, since gaps are provided between the guide arm portion and the guide grooves provided in the rolling element circulation path in the direction turning paths, the distal ends of the rolling elements accommodation belt move so as to follow the outer circumferential sides of the guide grooves within the range of the gaps. Consequently, since the distal ends of the rolling elements accommodation belt deviate from their normal position in the direction in which the distal ends move away from each other, even though they are brought into contact with each other, the distal ends of the rolling elements accommodation belt are made difficult to transmit the compression force in the traveling direction at the height of the guide arm portion of the rolling elements accommodation belt. Although the transmission efficiency is increased by providing a very small gap between the guide groove and the guide arm portion, the number of locations where the belt guide arm portion is brought into rubbing contact with the guide grooves is increased, and it is considered that friction is increased or the rolling elements accommodation belt wears earlier than expected or designed.

### SUMMARY OF THE INVENTION

Then, the invention has been made with a view to solving the problems in the related art, and a principal object thereof is to provide a novel linear guide apparatus and a rolling elements accommodation belt applied thereto which can suppress the action of a tensile force on the rolling elements accommodation belt and can transmit efficiently a compression force in a circulation direction so as to enable the smoother circulation of the rolling elements accommodation belt.

With a view to solving the problem, according to a first aspect of the invention, there is provided a linear guide apparatus including:
a plurality of a rolling elements which circulates within a rolling element circulation path at predetermined intervals;
spacers disposed between the respective rolling elements; and
a rolling elements accommodation belt which accommodates the rolling elements, connects each of the spacers and has ends thereof, wherein
at least one rolling element is disposed between the ends of the rolling elements accommodation belt,
a cantilever-shaped elastically deformable projection is provided on an end face of the spacer situated at the end of the rolling elements accommodation belt,
the projection projects from an inner circumferential side towards an outer circumferential side of the rolling element circulation path and
the projection is inclined relative to an external end face of the spacer at the end of the rolling elements accommodation belt.

In addition, according to a second aspect of the invention, there is provided a linear guide apparatus including:
a plurality of a rolling elements which circulates within a rolling element circulation path at predetermined intervals;
spacers disposed between the respective rolling elements; and
a rolling elements accommodation belt which accommodates the rolling elements, connects each of the spacers and has ends thereof, wherein
at least one rolling element is disposed between the ends of the rolling elements accommodation belt,
a cantilever-shaped elastically deformable projection is provided on an end face of the spacer situated at the end of the rolling elements accommodation belt, and the projection includes:
   a joint portion which projects in a longitudinal direction from the end face of the spacer situated at the end of the rolling elements accommodation belt; and
   a rolling element contact portion which continues from the joint portion and extends from an outer circumferential side towards an inner circumferential side of the rolling element circulation path.

In addition, according to a third aspect of the invention, there is provided the linear guide apparatus as set forth in the second aspect of the invention, wherein
a free end side of the rolling element contact portion is further inclined in a direction in which the free end side moves away from an external end face of the spacer situated at the end of the rolling elements accommodation belt relative to the external end face of the spacer.

Additionally, according to a fourth aspect of the invention, there is provided the linear guide apparatus as set forth in the first aspect of the invention, wherein
the rolling elements accommodation belt which accommodates the rolling elements is disposed within the rolling element circulation path in an endless fashion.

On the other hand, according to a fifth aspect of the invention, there is provided a rolling elements accommodation belt which is disposed within a rolling element circulation path of a linear guide apparatus and accommodates therein a plurality of rolling elements which circulate within the rolling element circulation path at predetermined intervals via spacers, the rolling elements accommodation belt including:
a cantilever-shaped elastically deformable projection provided on an end face of the spacer situated at an end thereof, wherein
wherein the rolling elements accommodation belt connects each of the spacers,
the projection projects from an inner circumferential side towards an outer circumferential side of the rolling element circulation path and
the projection is inclined relative to an external end face of the spacer at the end of the rolling elements accommodation belt.

In addition, according to a sixth aspect of the invention, there is provide a rolling elements accommodation belt which is disposed within a rolling element circulation path of a linear guide apparatus and accommodates therein a plurality of rolling elements which circulate within the rolling element circulation path at predetermined intervals via spacers, the rolling elements accommodation belt including:
a cantilever-shaped elastically deformable projection provided on an end face of the spacer situated at an end thereof, the projection including:
   a joint portion which projects in a longitudinal direction from the end face of the spacer situated at the end of the rolling elements accommodation belt; and
   a rolling element contact portion which continues from the joint portion and extends from an outer circumferential side towards an inner circumferential side of the rolling element circulation path,
wherein the rolling elements accommodation belt connects each of the spacers.

In addition, according to a seventh aspect of the invention, there is provided the rolling elements accommodation belt as set forth in the sixth aspect of the invention, wherein
a free end side of the rolling element contact portion is further inclined in a direction in which the free end side moves away from an external end face of the spacer situated at the end thereof relative to the external end face of the spacer.

According to the first aspect of the invention, even in the event that the distal end portions of the rolling elements accommodation belt oscillate in the rolling element circulation path due, for example, to the gap between the guide arm portion which connect the spacers disposed, respectively, between the rolling elements to each other and the guide groove on the rolling element circulation path side being large, since the rolling element disposed between the end portions of the rolling elements accommodation belt is brought into secure abutment with the inclined portions on the projections thereof, the rolling element between the end portions can forcibly be directed into the circulating direction in the direction turning paths of the rolling element circulation path in an ensured fashion.

In addition, in the event that the rolling element between the end portions is in abutment with the other projection in this state, since the rolling element further acts to push the other projection, the pressure is also transmitted to one end portion with good efficiency, so as to cause the rolling elements accommodation belt, that is, the respective rolling elements to circulate smoothly.
In addition, since this projection is formed into the cantilever-like shape and hence is easy to be deformed in the circulating direction, a change in length or distance between the end portions of the rolling elements accommodation belt due to thermal expansion or elastic deformation can easily be permitted. As a result of this, since no intentional gap needs to be provided between the end portions of the rolling elements accommodation belt in a forced fashion, an excessively large tensile force that would be produced when the belt is driven at high speeds can be reduced, thereby making it possible to exhibit a superior durability.

Next, according to the second aspect of the invention, since the projection is further formed into the hook-like cantilever shape, in the event that the projection is made longer than the joint portion on the rolling element contact portion side, only the rolling element contact portion can be deflected. Consequently, when the rolling element between the end portions is brought into contact with a substantially central portion of the rolling element contact portion, the free end side of the rolling element contact portion is deflected towards a spacer side thereof so as to be brought into contact with the spacer to thereby form substantially a right-angled triangular shape at the end portion of the relevant spacer. Therefore, the same function and advantage as those exhibited by the first aspect of the invention can be exhibited.

Furthermore, in contrast to the projection according to the first aspect of the invention which projects from the inner circumferential side towards the outer circumferential side of the rolling element circulation path at the inclined angle, the projection according to the second aspect of the invention projects from the outer circumferential side towards the inner circumferential side of the rolling element circulation path. Therefore, there can be exhibited an advantage that the rolling element, which is to be disposed between the end portions of the rolling elements accommodation belt, can easily be built into the relevant end portions.
In addition, according to the third aspect of the invention, in contrast to the second aspect of the invention, since the free end side of the rolling element contact portion of the projection is inclined in the direction in which the projection moves away from the external end face of the spacer at the end portion of the rolling elements accommodation belt relative to the end face of the spacer, the extension of the rolling elements accommodation belt due to a lengthwise tolerance, thermal expansion, swelling of the rolling elements accommodation belt can effectively be absorbed.

Additionally, according to the fourth aspect of the invention, since the rolling elements accommodation belt is disposed within the rolling element circulation path in the endless fashion, a tensioned state in the circulating direction within the rolling element circulation path can be stabilized. As a result of this, a change in friction during operation can be suppressed, thereby making it possible to provide the linear guide apparatus which operates more smoothly.
On the other hand, according to the fifth aspect of the invention, since the rolling elements accommodation belt provided herein is configured, as the rolling elements accommodation belt that is to be disposed within the rolling element circulation path of the linear guide apparatus, to have the same construction as that of the rolling elements accommodation belt employed in the first aspect of the invention, the same function and advantage as those exhibited by the first aspect of the invention can be exhibited by employing the rolling elements accommodation belt.

In addition, according to the sixth aspect of the invention, since the rolling elements accommodation belt provided herein is configured, as the rolling elements accommodation belt that is to be disposed within the rolling element circulation path of the linear guide apparatus, to have the same construction as that of the rolling elements accommodation belt employed in the second aspect of the invention, the same function and advantage as those exhibited by the second aspect of the invention can be exhibited by employing the rolling elements accommodation belt.
Additionally, according to the seventh aspect of the invention, since the free end side of the rolling element contact portion of the projection of the rolling elements accommodation belt illustrated in the second aspect of the invention is inclined in the direction in which the projection moves away from the external end face of the spacer at the end portion of the rolling elements accommodation belt relative to the end face of the spacer, the same function and advantage as those exhibited by the third aspect of the invention can be exhibited by employing the rolling elements accommodation belt.

### BRIEF DESCRIPTION OF THE DRAWINGS

Fig. 1 is a longitudinal sectional view showing a linear guide apparatus according to a first embodiment of the invention;
Fig. 2 is a plan view showing a whole rolling element circulation path of the linear guide apparatus according to the first embodiment of the invention;
Fig. 3 is a partially enlarged perspective view showing the vicinity of a distal end portion of a rolling elements accommodation belt according to the first embodiment of the invention;
Fig. 4 is a partially enlarged plan view showing the vicinity of a direction turning path of the rolling element circulation path of the linear guide apparatus according to the first embodiment of the invention;
Fig. 5 is a plan view showing a whole rolling element circulation path of a linear guide apparatus according to a second embodiment of the invention;
Fig. 6 is a partially enlarged perspective view showing the vicinity of a distal end portion of a rolling elements accommodation belt according to the second embodiment of the invention;
Fig. 7 is a side view showing the vicinity of the distal end portion of the rolling elements accommodation belt according to the second embodiment of the invention;
Fig. 8 is a partially enlarged plan view showing the vicinity of a direction turning path of the rolling element circulation path of the linear guide apparatus according to the second embodiment of the invention;
Fig. 9 is a plan view showing a whole rolling element circulation path of a linear guide apparatus according to a third embodiment of the invention; and
Fig. 10 is a partially enlarged perspective view showing the vicinity of a distal end portion of a rolling elements accommodation belt according to the third embodiment of the invention.

### DETAILED DESCRIPTION OF THE PREFERED EMBODIMENTS

Next, embodiments of a linear guide apparatus 100 according to the invention will be described by reference to the accompanying drawings.

### (First Embodiment)

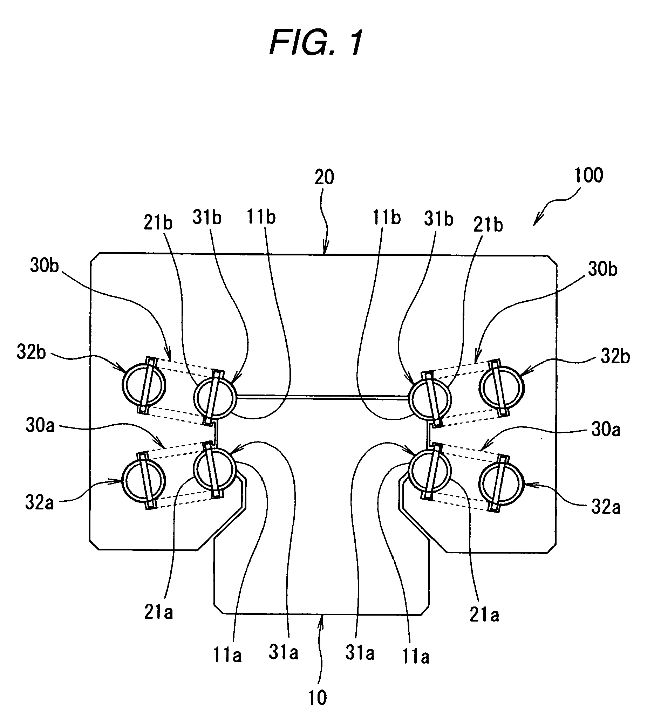

Firstly, Figs. 1 to 4 show a first embodiment of a linear guide apparatus 100 according to the invention.

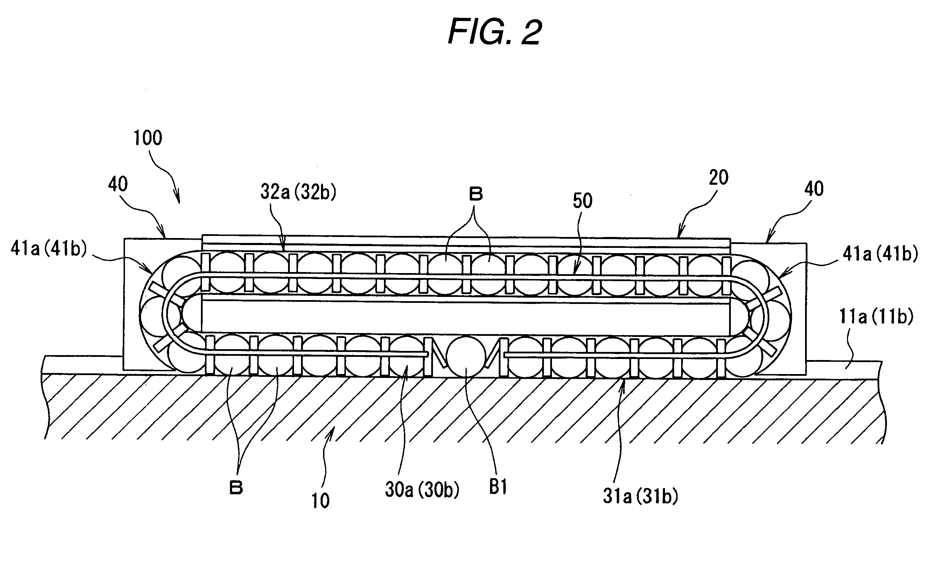

As shown in Figs. 1 and 2, the linear guide apparatus 100 is made up, mainly, of a guide rail 10 which extends linearly and a slider 20 which has a downwardly oriented U-shaped cross section and which is brought into sliding engagement with the guide rail 10 so as to straddle the rail.
This guide rail 10 is formed of a metallic material which is formed into a square shape in cross section, and lower rolling element raceway surfaces 11a, 11a are formed, respectively, on both side surfaces of the guide rail 10 so as to extend continuously along a longitudinal direction thereof.

On the other hand, slider-side lower rolling element raceway surfaces 21a, 21a are formed, respectively, on both inner side portions of the slider 20 so as to face the lower rolling element raceway surfaces 11a, 11a of the guide rail 10, respectively. Lower rolling element rolling paths 31a, 31a are formed by the lower rolling element raceway surfaces 21a, 21a and the lower rolling element raceway surfaces 11a, 11a, respectively, so as to extend along a longitudinal direction thereof.
In addition, lower rolling element return paths 32a, 32a are formed in the slider 20 so as to pass therethrough in the longitudinal direction. The lower rolling element return paths 32a, 32a are caused to communicate, respectively, with the lower rolling element rolling paths 31a, 31a at respective ends thereof via direction turning paths 41a, 41b which are provided, respectively, within end caps 40, 40 which are attached to both end portions of the slider 20.

Then, endless lower rolling element circulation paths 30a, 30a (only one of which is shown in Fig. 2, this being true in the following description), and which are each formed into an oval shape as viewed from the top are formed, as shown in Fig. 2, on both sides of the guide rail 10 by the lower rolling element rolling paths 31a, 31a, the lower rolling element return paths 32a, 32a and the direction turning paths 41a, 41a. A plurality of rolling elements (balls) B which are accommodated, respectively, in the lower rolling element circulation paths 30a, 30a are made to circulate in the longitudinal direction within the lower rolling element circulation paths 30a, 30a.

In addition, as shown in Fig. 1, upper rolling element raceway surfaces 11b, 11b, which are each formed into a fan shape in cross section similarly to the lower rolling element raceway surfaces 11a, 11a, are also formed, respectively, at both upper corner portions of the guide rail 10 so as to extend continuously in the longitudinal direction. Upper rolling element rolling paths 31b, 31b are formed so as to extend in the longitudinal direction thereof, respectively, by the upper rolling element raceway surfaces 11b, 11b and slider-side upper rolling element raceway surfaces 21b, 21b which are similarly formed, respectively, in both inner corner portions of the slider 20 so as to face the upper rolling element raceway surfaces 11b, 11b, respectively.

Similarly, endless upper rolling element circulation paths 30b, 30b which are each formed into an oval shape as viewed from the top are formed, as shown in Fig. 2, in upper positions on both the sides of the guide rail 10 by the upper rolling element rolling paths 31b, 31b, upper rolling element return paths 32b, 32b in the slider 20 and direction turning paths 41b, 41b. A plurality of rolling elements (balls) B which are accommodated, respectively, in the upper rolling element circulation paths 30b, 30b are made to circulate in the longitudinal direction within the upper rolling element circulation paths 30b, 30b.

In addition, as shown in the figures, in each of the rolling element circulation paths 30a, 30a, 30b, 30b, a rolling elements accommodation belt 50, which accommodates therein a plurality of rolling elements B adapted to circulated in each of the rolling element circulation paths 30a, 30a, 30b, 30b at predetermined intervals, is disposed in an endless fashion in such a state that both end portions of the rolling elements accommodation belt 50 are brought into abutment with each other with an inter-end-portion rolling element B1, which makes up one of the rolling elements B, held by the end portions.
As shown in Figs. 2 to 4, this rolling elements accommodation belt 50 is such that a plurality of disk-shaped spacers 51, 51 ... which are situated between the respective rolling elements B which circulates in each of the rolling element circulation paths 30a, 30a, 30b, 30b are connected to each other by plate-shaped connecting arm portion, and the rolling elements accommodation belt 50 accommodates independently between the adjacent spacers 51, 51 at the predetermined intervals and circulates in each of the rolling element circulation paths 30a, 30a, 30b, 30b in conjunction with rolling of the respective rolling elements B.

In addition, a surface of the spacer 51 which is brought into contact with the rolling element B is formed into a concave surface.
In addition, the connecting arm portion 51 is made wide enough to protrude transversely further outwards than the spacers 51, 51 on both edge sides thereof, whereby the rolling elements accommodation belt 50 is made to circulate in each of the rolling element circulation paths 30a, 30a, 30b, 30b in such a state that the protruding edge sides of the belt fit in endless annular guide grooves 32 which are formed on upper and lower wall surfaces of each of the rolling element circulation paths 30a, 30a, 30b, 30b.

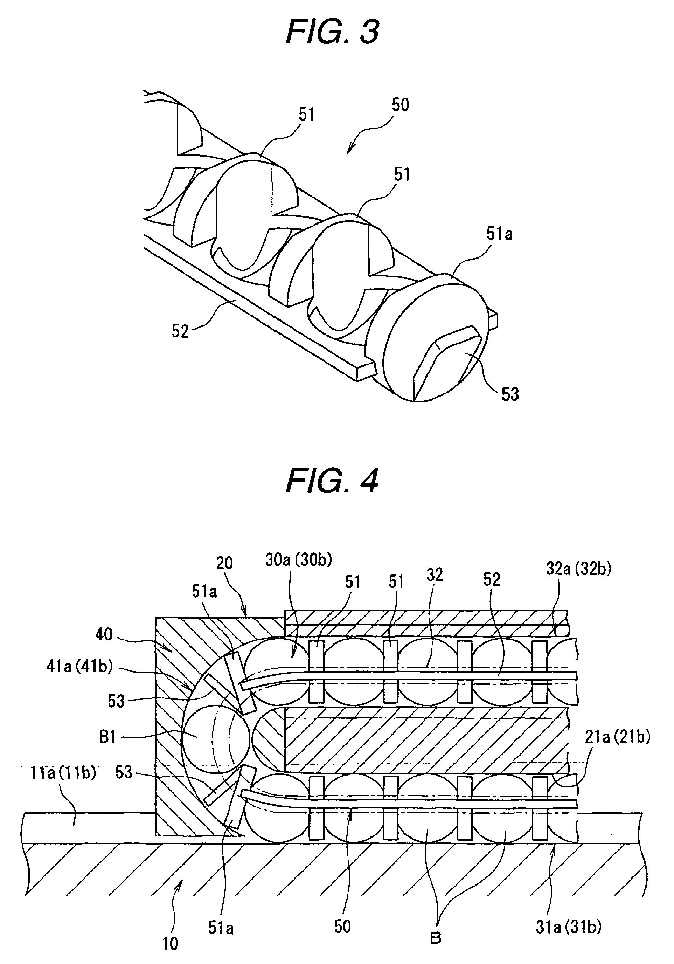

As shown in Figs. 3 and 4, a cantilever-shaped, elastically deformable projection 53 is provided on end faces of the spaces 51a, 51a which are situated at both ends of the rolling elements accommodation belt 50, respectively, so as to be brought into contact with the rolling element B1 which lies between the end portions of the belt.
Namely, this projection 53 is a tongue piece provided on each of the end faces of the spacers 51a, 51a at the end portions of the belt so as to project from an inner circumferential side towards an outer circumferential side of each of the rolling element circulation paths 30a, 30a, 30b, 30b and is inclined relative to the external end face of each of the end-portion spacers 51a, 51a.

Because of this, as shown in Fig. 4, when both the end portions and the rolling element B1 which lies between the end portions have reached the direction turning paths 41a and 41b, the respective projections 53 function to push out the inter-end-portion rolling element B1 in the circulating direction in an ensured fashion.
Namely, although the projection 53 is formed into the cantilever shape and hence is easy to be deformed, since in the direction turning paths 41a, 41b, the inter-end-portion rolling element B1 passes through the direction turning paths 41a, 41b while moving towards a root side of the projection 53, the inter-end-portion rolling element B1 is caused to be pushed against a highly rigid location of the projection 53, thereby making it possible for the inter-end-portion rolling element B1 to be pushed out in the circulating direction in the ensured fashion.

On the contrary, in a linear portion of each of the rolling element circulation paths 30a, 30a, 30b, 30b, as shown in Fig. 2, since the inter-end-portion rolling element B1 is pushed by a distal end of the projection 53 which is easy to be deformed, even though a distal end portion of the projection 53 is inclined, there occurs no case where the inter-end-portion rolling element B1 is pushed against the wall surface of each of the rolling element circulation paths 30a, 30a, 30b, 30b, whereby the rolling elements accommodation belt 50 is allowed to circulate smoothly in the respective rolling element circulation paths.

In addition, in the event that there is provided no gap between the inter-end-portion rolling element B1 and the end portions of the rolling elements accommodation belt 50, the inter-end-portion rolling element B1, which is pushed against by one of the belt end portions, is caused to push on the other inclined cantilever-like projection 53, whereby in particular in the direction turning paths 41a, 41b, since the pushing force of the belt end portion in the circulating direction is caused to press the other belt end portion towards the circulating direction via the inter-end-portion rolling element B1, the pushing force of the one belt end portion is transmitted to the other belt end portion with good efficiency.
By this configuration, the rolling elements accommodation belt 50 and all the rolling elements B which includes the inter-end-portion rolling element B1 are allowed to circulate more smoothly in each of the rolling element circulation paths 30a, 30a, 30b, 30b.

In addition, since the projection 53 is formed into the cantilever shape and hence is easy to be deformed in the circulating direction, the change in length or distance between the end portions of the rolling elements accommodation belt 50 due to thermal expansion or elastic deformation can easily be permitted. As a result of this, since the necessity is obviated of forcibly providing the intentional gap between the end portions of the rolling elements accommodation belt 50, the excessively large tensile force which would otherwise be produced when the belt is driven at high speeds can be reduced, thereby making it possible to exhibit a superior durability.
Note that this embodiment is such as to correspond to the first, fourth and fifth aspect of the invention which are described as the means for solving the problem.

### (Second Embodiment)

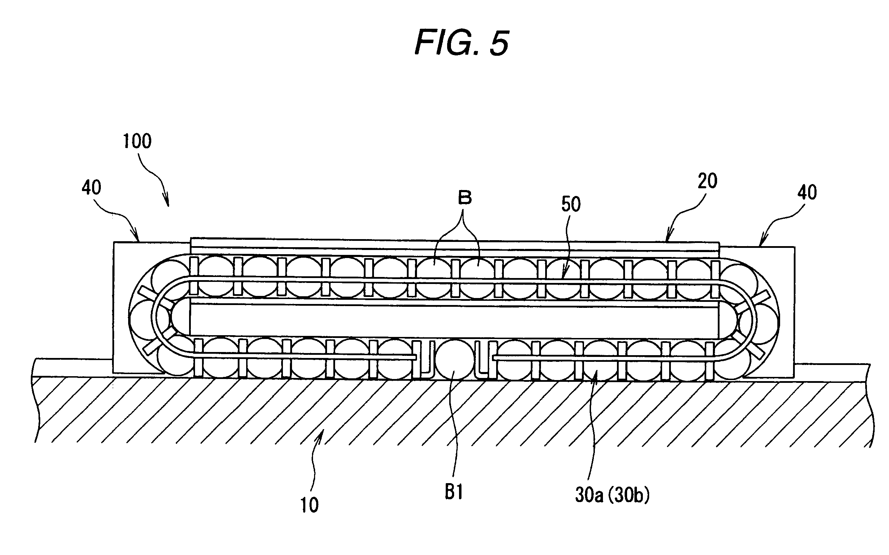

Next, Figs. 5 to 8 show a second embodiment of the linear guide apparatus 100 according to the invention, and like reference numerals will be given to like portions to those of the first embodiment, so as to omit the repetition of similar descriptions.
As shown in the figures, in this embodiment, as in the case of the first embodiment, as a cantilever-shaped, elastically deformable projection 53 at each of end portions of a rolling elements accommodation belt 50 which is disposed in each of rolling element circulation paths 30a, 30a, 30b, 30b, a hook-like projection 53 is provided which is made up of a joint portion 53a which projects in a longitudinal direction from an end face of a spacer 51a at an end face of the belt and a rolling element contact portion 53b which continues from the joint portion 53a and extends from an outer circumferential side towards an inner circumferential side of each of the rolling element circulation paths 30a, 30a, 30b, 30b.

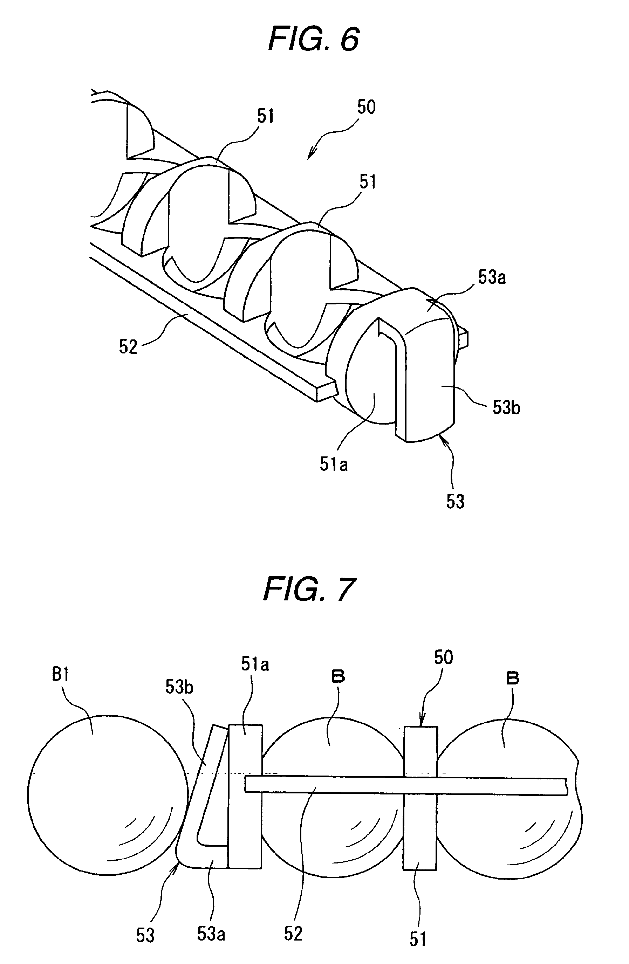

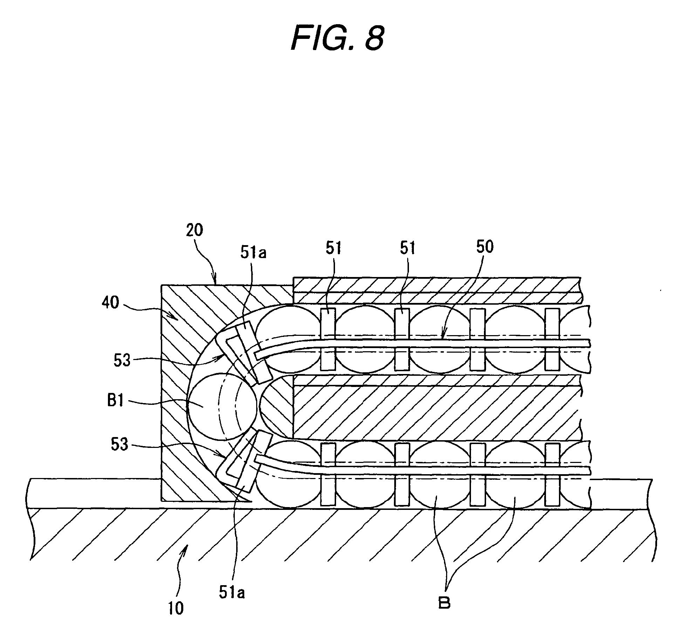

Then, in a case where the projection 53 constructed as described above is used, the function and advantage exhibited by the first embodiment can also be exhibited.
Namely, in this embodiment, since the projection 53 provided on the spacer 51a at the end face of the rolling elements accommodation belt 50 is formed into the hook-like cantilever shape, only the rolling element contact portion 53b lying at a distal end of the joint portion 53 can be made to be deformed. Consequently, as shown in Figs. 7 and 8, when an inter-end-portion rolling element B1 is brought into contact with a substantially central portion of the rolling element contact portion 53b, a free end side of the rolling element contact portion 53b is deflected towards the spacer 51a at the end face or end portion of the belt by virtue of a pressure produced by the contact and is then brought into abutment with a surface of the relevant spacer 51a, so as to form substantially a right-angled triangular shape at an end portion of the spacer 51a, whereby similar function and advantage to those exhibited by the first embodiment can be exhibited.

Furthermore, in this embodiment, in addition to the function and advantage exhibited by the first embodiment, when attempting to assemble the inter-end-portion rolling element B1 between the end portions of the rolling elements accommodation belt 50 as shown in Fig. 8, since the inter-end-portion rolling element B1 can be made to be built thereinto from an outer circumferential side of each of the rolling element circulation paths 30a, 30a, 30b, 30b, the assembling properties can be enhanced further than the first embodiment.
Note that this embodiment is such as to correspond to the second, fourth and sixth aspect of the invention which are described as the means for solving the problem.

### (Third Embodiment)

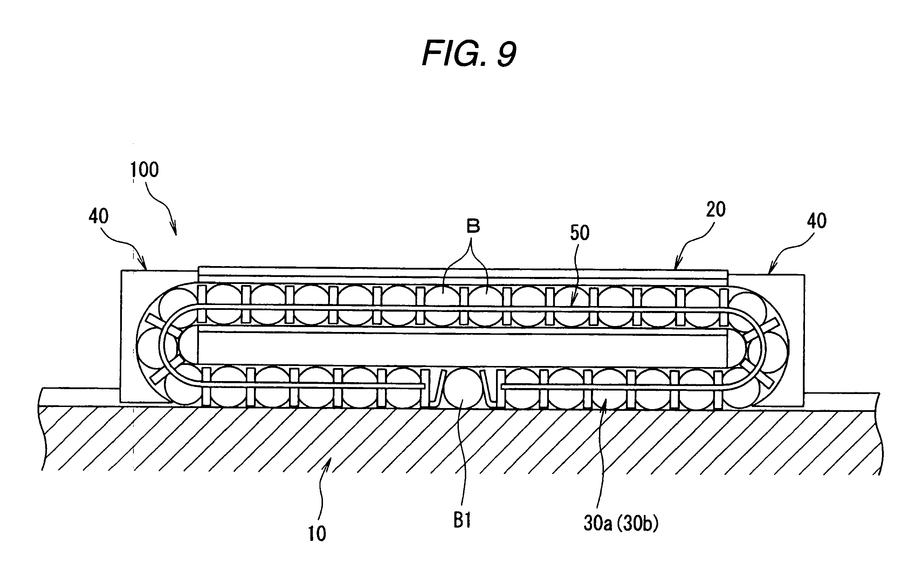

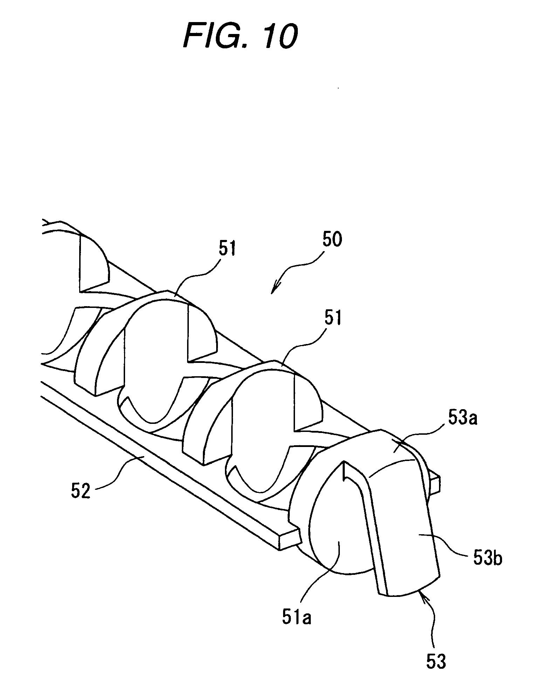

Next, Figs. 9 and 10 shows a third embodiment of the linear guide apparatus 100 of according to the invention, which is a modified example made to the second embodiment. In addition, like reference numerals will be given to like portions to those of the first and second embodiments, so as to omit the repetition of similar descriptions.

As shown in the figures, in this embodiment, as in the case of the second embodiment, as a cantilever-shaped, elastically deformable projection 53 at each of end portions of a rolling elements accommodation belt 50, a hook-like projection 53 is provided which is made up of a joint portion 53a which projects in a longitudinal direction from an end face of a spacer 51a at an end face of the belt and a rolling element contact portion 53b which continues from the joint portion 53a and extends from an outer circumferential side towards an inner circumferential side of each of the rolling element circulation paths 30a, 30a, 30b, 30b. In particular, in this embodiment, a free end side of the rolling element contact portion 53b is further inclined in a direction in which the projection moves away from the external end face of the belt end spacer 51a.

According to this configuration, in addition to the functions and advantages exhibited by the first and second embodiments, the extension of the rolling elements accommodation belt 50 due to a tolerance in length, thermal expansion, swelling and the like thereof can be absorbed more effectively.
Note that this embodiment is such as to correspond to the third, fourth and seventh aspect of the invention which are described as the means for solving the problem.
In addition, while in the respective embodiments, the balls are described as being used as the rolling elements B, the rolling element B is not limited thereto but may be a cylindrical or barrel-type roller, and in this case, too, totally the same functions and advantages as those described above can, of course, be exhibited.

## Claims

1. A linear guide apparatus comprising:
a plurality of a rolling elements which circulates within a rolling element circulation path at predetermined intervals;
spacers disposed between the respective rolling elements; and
a rolling elements accommodation belt which accommodates the rolling elements, connects each of the spacers and has ends thereof, wherein
at least one rolling element is disposed between the ends of the rolling elements accommodation belt,
a cantilever-shaped elastically deformable projection is provided on an end face of the spacer situated at the end of the rolling elements accommodation belt,
the projection projects from an inner circumferential side towards an outer circumferential side of the rolling element circulation path and
the projection is inclined relative to an external end face of the spacer at the end of the rolling elements accommodation belt.

2. A linear guide apparatus comprising:
a plurality of a rolling elements which circulates within a rolling element circulation path at predetermined intervals;
spacers disposed between the respective rolling elements; and
a rolling elements accommodation belt which accommodates the rolling elements, connects each of the spacers and has ends thereof, wherein
at least one rolling element is disposed between the ends of the rolling elements accommodation belt,
a cantilever-shaped elastically deformable projection is provided on an end face of the spacer situated at the end of the rolling elements accommodation belt, and the projection comprises:
a joint portion which projects in a longitudinal direction from the end face of the spacer situated at the end of the rolling elements accommodation belt; and
a rolling element contact portion which continues from the joint portion and extends from an outer circumferential side towards an inner circumferential side of the rolling element circulation path.

3. The linear guide apparatus as set forth in Claim 2, wherein
a free end side of the rolling element contact portion is further inclined in a direction in which the free end side moves away from an external end face of the spacer situated at the end of the rolling elements accommodation belt relative to the external end face of the spacer.

4. The linear guide apparatus as set forth in Claim 1, wherein
the rolling elements accommodation belt which accommodates the rolling elements is disposed within the rolling element circulation path in an endless fashion.

5. A rolling elements accommodation belt which is disposed within a rolling element circulation path of a linear guide apparatus and accommodates therein a plurality of rolling elements which circulate within the rolling element circulation path at predetermined intervals via spacers, the rolling elements accommodation belt comprising:
a cantilever-shaped elastically deformable projection provided on an end face of the spacer situated at an end thereof,
wherein
wherein the rolling elements accommodation belt connects each of the spacers,
the projection projects from an inner circumferential side towards an outer circumferential side of the rolling element circulation path and
the projection is inclined relative to an external end face of the spacer at the end of the rolling elements accommodation belt.

6. A rolling elements accommodation belt which is disposed within a rolling element circulation path of a linear guide apparatus and accommodates therein a plurality of rolling elements which circulate within the rolling element circulation path at predetermined intervals via spacers, the rolling elements accommodation belt comprising:
a cantilever-shaped elastically deformable projection provided on an end face of the spacer situated at an end thereof, the projection comprising:
a joint portion which projects in a longitudinal direction from the end face of the spacer situated at the end of the rolling elements accommodation belt; and
a rolling element contact portion which continues from the joint portion and extends from an outer circumferential side towards an inner circumferential side of the rolling element circulation path,
wherein the rolling elements accommodation belt connects each of the spacers.

7. The rolling elements accommodation belt as set forth in Claim 6, wherein
a free end side of the rolling element contact portion is further inclined in a direction in which the free end side moves away from an external end face of the spacer situated at the end thereof relative to the external end face of the spacer.
